(19) **Europäisches Patentamt**
**European Patent Office**
**Office européen des brevets**

(11) **EP 4 432 206 A1**

(12) **EUROPEAN PATENT APPLICATION**

(43) Date of publication:
**18.09.2024 Bulletin 2024/38**

(21) Application number: **24161076.5**

(22) Date of filing: **04.03.2024**

(51) International Patent Classification (IPC):
**G06Q 50/06** (2024.01) **H02J 3/00** (2006.01)

(52) Cooperative Patent Classification (CPC):
**G06Q 50/06; H02J 3/008**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.03.2023 JP 2023043483**

(71) Applicant: **Ricoh Company, Ltd.**
**Tokyo 143-8555 (JP)**

(72) Inventor: **KURODA, Mikiro**
**Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(54) **INTERMEDIARY SYSTEM, TRANSACTION SYSTEM, AND REQUESTING METHOD**

(57)      An intermediary system (5c1) of an intermediary for intermediating transactions of an asset between a supplier of the asset and a user of the asset. The intermediary system (5c1) includes a reception unit (51c1, 102) and a transmission unit (51c 1, 102). The reception unit (51c1, 102) receives, through a blockchain network, each of a plurality of amounts of supply for a specific asset produced by a specific type of production method. Each of the plurality of amounts of supply being supplied by a corresponding one of a plurality of suppliers within a fixed period. The reception unit (51c1, 102) receives, through the blockchain network, an amount of usage of the specific asset used by a predetermined user within the fixed period. The transmission unit (51c1, 102) transmits, to another intermediary system (5c2) of another intermediary, a request for transfer of the specific asset corresponding to an amount of shortage of the specific asset based on a shortage of the specific asset to be intermediated to the predetermined user. The shortage is indicated by a difference between a sum of the plurality of amounts of supply and the amount of usage.

FIG. 1

## Description

BACKGROUND

Technical Field

Embodiments of the present disclosure relate to an intermediary system, a transaction system, and a requesting method.

Related Art

Currently, electricity produced by renewable energy has been attracting attention. Such electricity is produced using renewable energy resources such as solar light, solar heat, wind power, biomass, geothermal power, hydropower, and heat in the atmosphere. In comparison with power generation using fossil fuels such as petroleum, coal, and liquefied natural gas, power generation using renewable energy hardly emits carbon dioxide ($CO_2$) that leads to global warming. For this reason, such renewable energy stands out as an environmentally friendly energy resource among the resources used for electricity production. By using environmentally friendly green energy, as described above, to operate, for example, factories, companies can increase brand credibility. Further, a method for using blockchain to carry out transactions of electricity produced by renewable energy is known (see, for example, Japanese Unexamined Patent Application Publication No. 2019-144851). The blockchain is called a distributed ledger. The blockchain links multiple ledgers, each representing the transaction history of an asset such as electricity, with multiple nodes (computers), thus preventing tampering with the transaction data.

Further, to achieve stable electricity usage, the consumed electricity and the produced electricity are to be adjusted in real time to match each other (simultaneous equilibrium). To achieve simultaneous equilibrium of electricity, a balance between demand and supply is typically maintained using techniques such as "aligning the amount of production (supply) with the amount of usage (demand)" or "aligning the amount of usage (demand) with the amount of production (supply)." The latter is called demand response and is a method for maintaining a balance between demand and supply by reducing a planned amount of electricity consumption through savings. As a result, with this method, users (consumers) behave in the market as if the users (consumers) have generated power themselves.

However, in the former case, when an intermediary of an asset such as electricity predicts the amount of usage (amount of consumption) and purchases the asset from a producer, the prediction may be incorrect, leading to a surplus or shortage of the asset. As a result, the fee of the asset may be increased due to the excessive operation cost or an asset that is not to be used may be unnecessarily generated.

SUMMARY

An embodiment of the present disclosure includes an intermediary system of an intermediary for intermediating transactions of an asset between a supplier of the asset and a user of the asset. The intermediary system includes a reception unit and a transmission unit. The reception unit receives, through a blockchain network, each of a plurality of amounts of supply for a specific asset produced by a specific type of production method. Each of the plurality of amounts of supply being supplied by a corresponding one of a plurality of suppliers within a fixed period. The reception unit receives, through the blockchain network, an amount of usage of the specific asset used by a predetermined user within the fixed period. The transmission unit transmits, to another intermediary system of another intermediary, a request for transfer of the specific asset corresponding to an amount of shortage of the specific asset based on a shortage of the specific asset to be intermediated to the predetermined user. The shortage is indicated by a difference between a sum of the plurality of amounts of supply and the amount of usage.

An embodiment of the present disclosure includes an intermediary system of an intermediary for intermediating transactions of an asset between a supplier of the asset and a user of the asset. The intermediary system includes a reception unit and a transmission unit. The reception unit receives, through a blockchain network, an amount of supply for a specific asset produced by a specific type of production method. The amount of supply is supplied by a predetermined supplier within a fixed period. The reception unit receives, through the blockchain network, each of a plurality of amounts of usage of the specific asset used by a corresponding one of a plurality of users within the fixed period. The transmission unit transmits, to another intermediary system of another intermediary, a request for transfer of the specific asset corresponding to an amount of shortage of the specific asset based on a shortage of the specific asset to be intermediated a specific one of the plurality of users. The shortage is indicated by a difference between the amount of supply and a sum of the plurality of amounts of usage.

An embodiment of the present disclosure includes an intermediary system of an intermediary for intermediating transactions of an asset between a supplier of the asset and a user of the asset. The intermediary system includes a reception unit and a transmission unit. The reception unit receives, through a blockchain network, each of a plurality of amounts of supply for a specific asset produced by a specific type of production method. Each of the plurality of amounts of supply is supplied by a corresponding one of a plurality of suppliers within a fixed period. The reception unit receives, through the blockchain network, each of a plurality of amounts of usage of the specific asset used by a corresponding one of a plurality of users within the fixed period. The transmission unit transmits, to another intermediary system of another intermediary, a request for transfer of the specific asset corresponding to an amount of shortage of the specific asset based on a shortage of the specific asset to be intermediated a specific one of the plurality of users. The shortage is indicated by a difference between a sum of the plurality of amounts of supply and a sum of the plurality of amounts of usage.

An embodiment of the present disclosure includes a transaction system including one of the above-described intermediary system and the other intermediary system corresponding to the one of the above-described intermediary system.

An embodiment of the present disclosure includes a requesting method performed by an intermediary system of an intermediary. The intermediary system intermediates transactions of an asset between a supplier of the asset and a user of the asset. The method includes receiving, through a blockchain network, each of a plurality of amounts of supply for a specific asset produced by a specific type of production method. Each of the plurality of amounts of supply is supplied by a corresponding one of a plurality of suppliers within a fixed period. The method includes receiving, through the blockchain network, an amount of usage of the specific asset used by a predetermined user within the fixed period. The method includes transmitting, to another intermediary system of another intermediary, a request for transfer of the specific asset corresponding to an amount of shortage of the specific asset based on a shortage of the specific asset to be intermediated to the predetermined user. The shortage is indicated by a difference between a sum of the plurality of amounts of supply and the amount of usage.

According to one or more aspects of the present disclosure, the supply and demand in transactions of an asset can be managed in real time to reduce the increase in the fee for the asset or prevent an unnecessary generation of the asset that is not to be used.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1 is a schematic diagram illustrating a transaction system according to some embodiments of the present disclosure;
FIG. 2 is a block diagram illustrating a hardware configuration of each of a plurality of systems and nodes according to some embodiments of the present disclosure;
FIG. 3 is a block diagram illustrating a functional configuration of a transaction system according to some embodiments of the present disclosure;
FIG. 4 is a conceptual diagram illustrating a producer management table according to some embodiments of the present disclosure;
FIG. 5 is a conceptual diagram illustrating a transaction details management table according to some embodiments of the present disclosure;
FIG. 6 is a sequence diagram illustrating processing for sharing data related to produced electricity, in a blockchain network according to some embodiments of the present disclosure;
FIG. 7 is a diagram illustrating a data structure of data related to electricity according to some embodiments of the present disclosure;
FIG. 8 is a sequence diagram illustrating processing for sharing data related to consumed electricity in a blockchain network according to some embodiments of the present disclosure;
FIG. 9 is a sequence diagram illustrating processing for sharing data related to intermediated electricity, in a blockchain network according to some embodiments of the present disclosure;
FIG. 10 is a sequence diagram illustrating processing for storing data related to surplus electricity, in a blockchain network according to some embodiments of the present disclosure;
FIG. 11 is a diagram illustrating a data structure of data related to surplus electricity according to some embodiments of the present disclosure;
FIG. 12 is a sequence diagram illustrating processing for calculating an amount of total supply and an amount of total usage according to some embodiments of the present disclosure;
FIG. 13 is a sequence diagram illustrating processing for sharing data related to electricity shortage and processing for sharing data related to a transfer of surplus electricity, in a blockchain network according to some embodiments of the present disclosure; and
FIG. 14 is a diagram illustrating a data structure of data related to electricity shortage according to some embodiments of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments of the present disclosure are described in detail below with reference to the drawings.

Overview of System Configuration

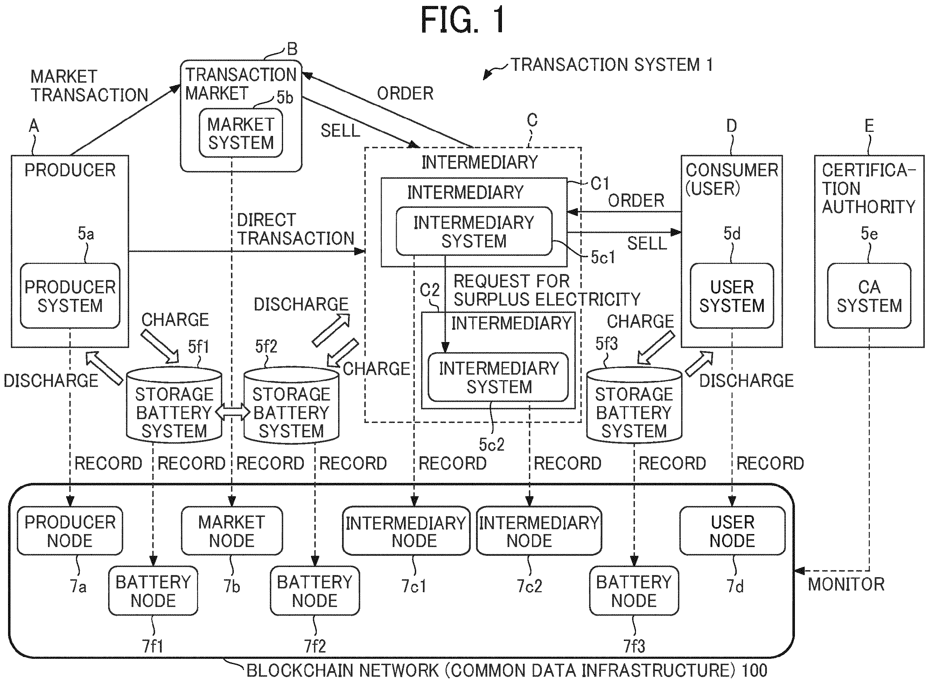

An overview of a configuration of a transaction system 1 according to an embodiment is described below. FIG. 1 is a schematic diagram illustrating a transaction system according to the present embodiment. In the following description of the present embodiment, electricity serves as an asset.

Explanation on Entities

In FIG. 1, the presence of a producer A of electricity, a transaction market B for electricity, an intermediary C for electricity, a user (consumer) of electricity, and a certification authority E are illustrated. The producer A, the transaction market B, the intermediary C, and the user D trade electricity by using a blockchain network 100 serving as a common data infrastructure. The operator managing the blockchain network 100 operates on a registration basis, registers entities such as companies (the producer A, the transaction market B, the intermediary C, and the user D), and issues a digital certificate to the registered entities such as companies. The blockchain network 100 has an application programming interface (API) for storing (recording) or reading data on an interchange or transaction of electricity among various companies. Such data includes, for example, data related to electricity (electricity-related data), data related to surplus electricity (surplus electricity-related data), and data related to electricity shortage (electricity shortage-related data), which are described later. Through a standard API, various companies can access the blockchain network 100 by creating a blockchain ledger.

In practice, electricity is sent from the producer A to the user D through a constructed transmission and distribution network, such as substations and transmission lines. The transaction market B or the intermediary C conducts transactions of ownership rights for electricity between the producer A and the user D.

The producer A serving as a supplier is an entity that produces electricity from renewable energy. Such electricity produced by renewable energy is called green energy in Japan. For example, the producer A produces electricity from solar light. The producer A may be an entity that produces electricity using a fossil fuel such as petroleum, but includes an entity that produces electricity at least using renewable energy.

The transaction market B is an institution in which (ownership rights for) electricity produced by the producer A is the subject of market transactions.

The intermediary C is an entity that intermediates transactions of (ownership rights for) electricity. The intermediary C places an order for electricity with the transaction market B, and the transaction market B sells electricity to the intermediary C. The intermediary C can also directly conduct transactions for electricity with the producer A without the transaction market B. In the description of the present embodiment, two intermediaries C1 and C2 are present. The intermediary C1 and the intermediary C2 can mutually or unilaterally transfer ownership rights for electricity to each other.

The user D serving as a user places an order for electricity with the intermediary C, and the intermediary C sells electricity to the user D. The user includes a person who has ownership rights for an asset such as a real estate that is not consumed like electricity. The user D can apply for public subsidies based on the renewable energy usage ratio (or $CO_2$ reduction ratio) of the company of the user D or the usage of renewable energy of the company, supported by a production method certificate.

The certification authority E is a public institution such as a national or local public entity for monitoring the type of production method for an asset (a specific type of production method), and monitors, for example, whether electricity subjected to a transaction is produced using renewable energy. Examples of the type of production method for electricity include a production method using solar light or solar heat, a production method using wind power, a production method using biomass, a production method using geothermal power, a production method using hydropower, a production method using heat in the atmosphere, and a production method using nuclear power. The production methods using solar light, solar heat, wind power, biomass, geothermal power, hydropower, and heat in the atmosphere belong to a large group as a group of production methods using renewable energy. The production methods using petroleum, coal, and liquefied natural gas belong to another large group as a group of production methods using fossil fuels. In comparison with power generation using fossil fuels, power generation using renewable energy hardly emits carbon dioxide ($CO_2$) that leads to global warming. For this reason, such renewable energy stands out as an environmentally friendly energy resource. In the description of the present embodiment, as an example of renewable energy, solar light, solar heat, wind power, biomass, geothermal power, hydropower, or heat in the atmosphere is used. Further, petroleum, coal, or liquefied natural gas is used as an example of fossil fuel.

When monitoring the blockchain network 100 and detecting any fraud related to data writing, the certification authority E gives a penalty such as revocation of a certificate to an entity (for example, a company) that has been involved in this data writing. As a result, the integrity of data on the blockchain network 100 can be retained. Accordingly, based on the decentralized system of the blockchain network 100, even when any node drops (drops out of sync), the blockchain network 100 still operates as long as there are other nodes. Since maintaining the system (including a producer system 5a), the other entities (companies) can continue the usual operations. Further, since revocation is managed simultaneously and in real-time through blockchain, each entity (company) can recognize a range of effects of the revocation.

There may be multiple producers A, transaction markets B, consumers D, or certificate authorities E. Further, there may be three or more intermediaries C.

Overall Configuration of Transaction System

Referring to FIG. 1, an overall configuration of the transaction system 1 is described below. Each of the nodes in the transaction system 1 authenticates access to the node by verifying a digital certificate of a registered entity (company) to give permission for data record (reading data/storing data).

The producer A owns or manages the producer system 5a and a producer node 7a. The producer system 5a acquires from a power generation system 3, which is described later, power generation information indicating an amount of power generation. The producer system 5a is authorized to access the producer node 7a.

The transaction market B owns or manages a transaction market system ("market system") 5b and a transaction market node ("market node") 7b. The transaction market system 5b is authorized to access the transaction market node 7b.

The intermediary C1 owns or manages an intermediary system 5c1 and an intermediary node 7c1. The intermediary C2 owns or manages an intermediary system 5c2 and an intermediary node 7c2. The intermediary systems 5c1 and 5c2 are authorized to access the intermediary nodes 7c1 and 7c2, respectively.

The user D owns or manages a user system 5d and a user node 7d. The user system 5d is authorized to access the user node 7d.

The certification authority E owns or manages a certification authority (CA) system 5e. The certification authority system 5e accesses the blockchain network 100 and conducts monitor to verify, for example, whether the electricity in the transaction has been produced by renewable energy.

Further, the transaction system 1 can store produced electricity by one or more storage batteries. The transaction system 1 of FIG. 1 includes storage battery systems 5f1, 5f2, and 5f3, and each of the storage battery systems 5f1, 5f2, and 5f3 includes a storage battery. The producer A can charge electricity into the storage battery system 5f1 and discharge electricity from the storage battery system 5f1. The intermediary C can charge electricity into the storage battery system 5f2 and discharge electricity from the storage battery system 5f2. Further, the storage battery systems 5f1 and 5f2 can charge and discharge each other. Further, the user D can charge electricity into the storage battery system 5f3 and discharge electricity from the storage battery system 5f3.

The storage battery systems 5f1, 5f2, and 5f3 are authorized to access the storage battery nodes 7f1, 7f2, and 7f3, respectively.

The producer system 5a, the transaction market system 5b, the intermediary systems 5c1 and 5c2, the user system 5d, the certification authority system 5e, and the storage battery systems 5f1, 5f2, and 5f3 may be individually or collectively referred to as a "system 5" or "system 5." The producer node 7a, the transaction market node 7b, the intermediary nodes 7c1 and 7c2, the user node 7d, and the storage battery nodes 7f1, 7f2, and 7f3 may be individually or collectively referred to as a "node 7" or "nodes 7." The blockchain network 100 is constructed through the nodes 7 illustrated in FIG. 1.

Hardware Configuration of System and Node

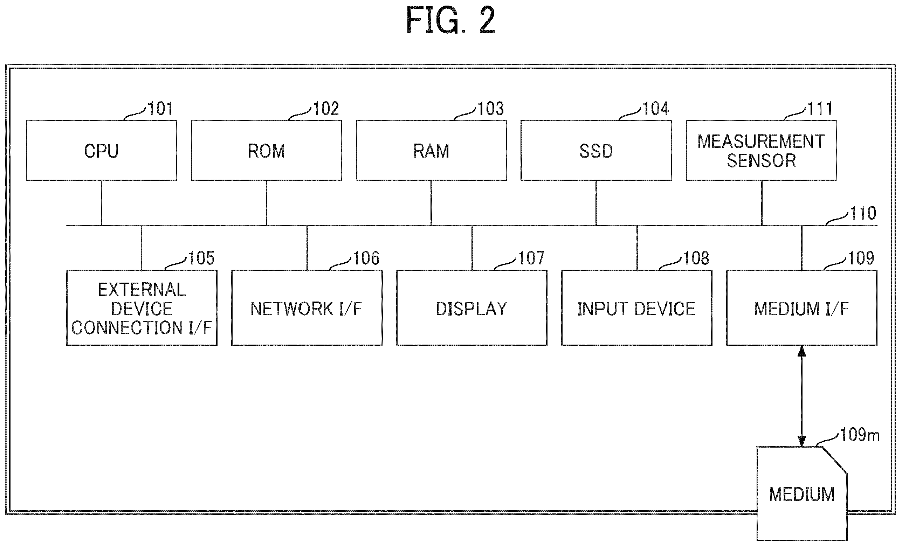

Referring to FIG. 2, a hardware configuration of each of the plurality of systems and nodes is described below. FIG. 2 is a diagram illustrating a hardware configuration of each of the systems and nodes according to the present embodiment.

FIG. 2 is a diagram illustrating a hardware configuration of each of the systems and nodes, with electrical connections, according to the present embodiment.

As illustrated in FIG. 2, each of the system 5 and the node 7 is implemented by a computer that includes a central processing unit (CPU) 101, a read-only memory (ROM) 102, a random-access memory (RAM) 103, a solid-state drive (SSD) 104, an external device connection interface (I/F) 105, a network I/F 106, a display 107, an input device 108, a medium I/F 109, and a bus line 110.

The CPU 101 that is a processor controls the entire operation of the information processing apparatus 10. The ROM 102 stores a program for booting the CPU 101 such as an initial program loader (IPL). The RAM 103 is used as a work area for the CPU 101.

The SSD 104 reads or writes various types of data under the control of the CPU 101. Any memory such as a hard disk drive (HDD) may be used instead of the SSD 104.

The external device connection I/F 105 is an interface that connects the computer to various external devices. Examples of the external device include a display, a speaker, a keyboard, a mouse, a universal serial bus (USB) memory, and a printer.

The network I/F 106 is an interface that establishes communication for data exchange via a communication network such as the Internet.

The display 107 serves as a display means such as a liquid crystal display (LCD) or an organic electroluminescence (EL) display that displays various images.

The input device 908 serves as an input means that allows a user to select or execute various instructions, select a subjected item to be processed, or move a cursor. Examples of the input device 908 include a pointing device and a touch panel.

The medium I/F 109 controls the reading and writing (storing) of data from and to a recording medium 109m such as a flash memory. Examples of the recording medium 109m include a digital versatile disc (DVD) and a BLU-RAY DISC.

The bus line 110 is, for example, an address bus or a data bus that electrically connects the components, such as the CPU 101 illustrated in FIG. 2, to each other.

In addition to the configuration described above with reference to FIG. 2, the power generation system 3, which is described later, includes a measurement sensor 111 that measures the amount of power generation. Similarly, the user system 5d further includes a measurement sensor 111 that measures the amount of electricity consumption in addition to the configuration described above with reference to FIG. 2.

Functional Configuration of Transaction System

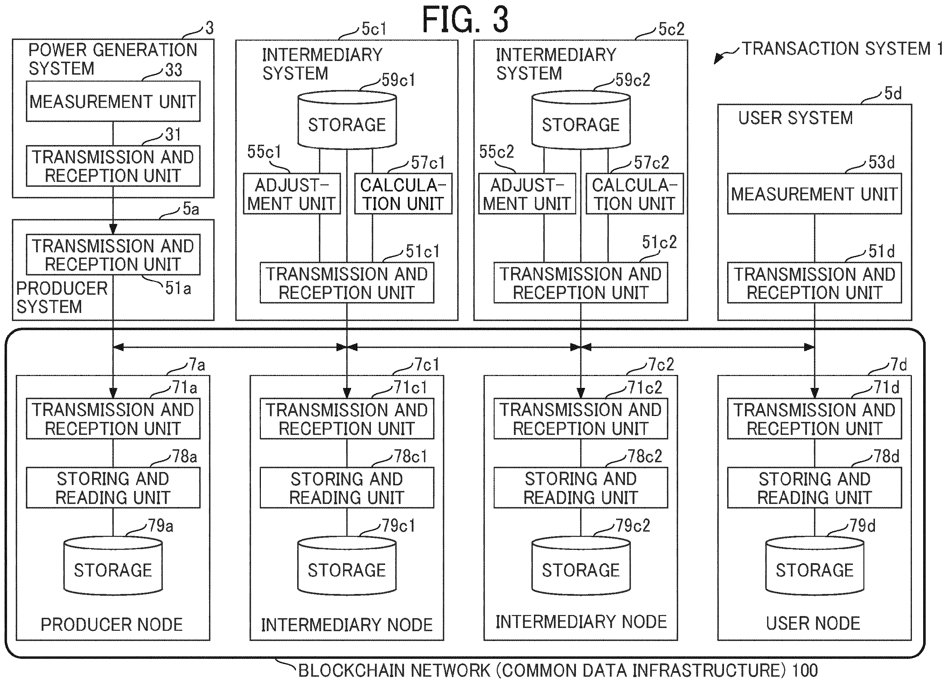

Referring to FIG. 3, a functional configuration of the transaction system 1 is described below. Since the transaction market system 5b and the certification authority system 5e have the same functional configuration as that of the producer system 5a, the description thereof is omitted.

Power Generation System

As illustrated in FIG. 3, the power generation system 3 is implemented by, for example, a smart meter, and includes a transmission and reception unit 31 and a measurement unit 33. The above-mentioned units are functions implemented by or caused to function by operating one or more of the components illustrated in FIG. 2 operating in accordance with an instruction of the CPU 101 according to the control program expanded from the SSD 104 to the RAM 103.

The transmission and reception unit 31 communicates, or exchanges data, with another apparatus (system).

The measurement unit 33 that is implemented by the measurement sensor 111 measures the amount of power generation, namely, the amount of electricity produced, by a power generation facility at fixed intervals (for example, every 30 minutes).

Producer System

As illustrated in FIG. 3, the producer system 5a includes a transmission and reception unit 51a. The transmission and reception unit 51a is a function implemented by or caused to function by operating one or more of the components illustrated in FIG. 2 in accordance with an instruction of the CPU 101 according to the control program expanded from the SSD 104 to the RAM 103.
The transmission and reception unit 51a communicates, or exchanges data, with another apparatus (system).

Intermediary System

Intermediary System 5c1

As illustrated in FIG. 3, the intermediary system 5c1 includes a transmission and reception unit 51c1, an adjustment unit 55c1, and a calculation unit 57c1. The above-mentioned units are functions implemented by or caused to function by operating one or more of the components illustrated in FIG. 2 operating in accordance with an instruction of the CPU 101 according to the control program expanded from the SSD 104 to the RAM 103. The intermediary system 5c1 further includes a storage unit (storage) 59c1 implemented by the RAM 103 or the SSD 104.

Producer Management Table

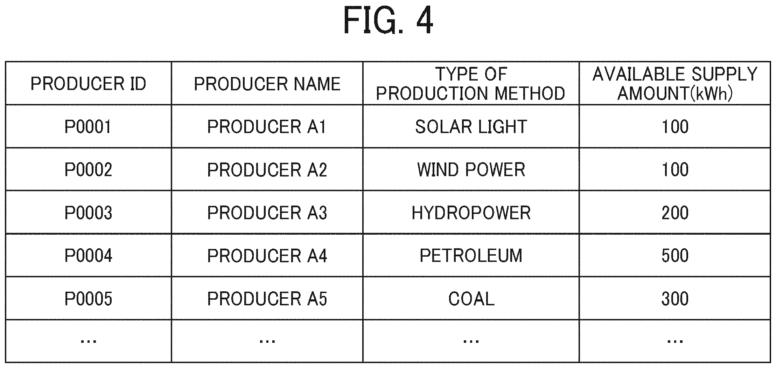

FIG. 4 is a conceptual diagram illustrating a producer management table according to the present embodiment. The producer management table is a table for the intermediary C1 to manage the producers of electricity. The storage unit 59c1 stores a producer management database (DB) including a producer management table as illustrated in FIG. 4. In the producer management table, items of producer identifier (ID), producer name, type of production method for an asset such as electricity, and available supply amount of electricity are managed in association with each other.

The producer ID is producer identification information for identifying a producer of an asset such as electricity. The type of production method indicates a type of energy used to produce the asset. As described above, examples of the type of production method include, as a small group, a production method using solar light, a production method using wind power, a production method using biomass, a production method using geothermal power, a production method using hydropower, a production method using petroleum, a production method using coal, and a production method using liquefied natural gas. The above-described production methods (types of production methods) may be classified into one or more large groups, for example, a production method using renewable energy and a production method using fossil fuels. The available supply amount is an amount of asset that can be supplied by a producer in a fixed period (or a fixed time period), and is, for example, an amount of electricity (kWh).

Transaction Details Management Table

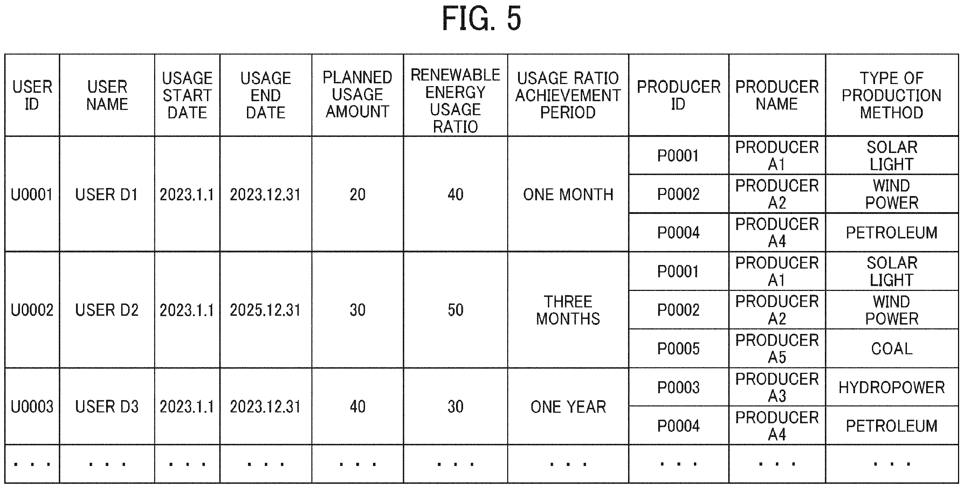

FIG. 5 is a conceptual diagram illustrating a transaction details management table according to the present embodiment. The transaction details management table is set by the user D such as a consumer to manage the transaction details for an asset.

The storage unit 59c1 stores a transaction details management DB including a transaction details management table as illustrated in FIG. 5. In the transaction details management table, transaction details information as contract details concluded between the producer A and the user D is managed. Specifically, items of user ID, user name, usage start date, usage end date, planned usage amount, renewable energy usage ratio, usage ratio achievement period, producer ID, producer name, and type of production method are managed in association with each other. The same item names as those in FIG. 4, such as the producer ID, have the same meaning.

The user ID serves as user identification information for identifying the user D of an asset such as electricity. The usage start date is information indicating a date when the user D starts using the asset such as the electricity. The usage end date is information indicating the date when the user D ends using the asset such as the electricity. The planned usage amount is an amount of asset to be used by the user D in a fixed period (or a fixed time period), and is, for example, an amount of electricity (kWh). The renewable energy usage ratio is information indicating a ratio (%) of the asset that is produced using renewable energy such as solar light to the asset such as the electricity to be used by the user D. The usage ratio achievement period indicates a period for achieving the renewable energy usage ratio, and the intermediary C does not need to achieve the renewable energy usage ratio every predetermined time (for example, every 30 minutes), and may achieve the renewable energy usage ratio within the usage ratio achievement period.

Functional Configuration

The transmission and reception unit 51c1 communicates, or exchanges data, with another apparatus (system).

The adjustment unit 55c1 searches the transaction details management table (see FIG. 5) using, for example, a user ID in a group F, which is described later, as a search key to read the corresponding information on "renewable energy usage ratio" and "usage ratio achievement period." Then, the adjustment unit 55c1 performs supply and demand adjustments for allocating an amount of electricity to each user D in the total amount of electricity corresponding to the electricity (rights) owned by the intermediary C1 in intervals of a predetermined period of time T (for example, in intervals of 30 minutes), in consideration of the renewable energy usage ratio and usage ratio achievement period. In other words, the adjustment unit 55c1 allocates to the user D (user) an amount of specific asset produced by a specific type of production method, such as electricity produced using renewable energy, based on the contract details indicated by the transaction details management table.

For example, when the user D1 seeks a renewable energy usage ratio of 40%, the adjustment unit 55c1 basically allocates to the user D1 an amount of electricity so as to achieve "40"% within the predetermined period T. However, when intermediating electricity corresponding to the renewable energy usage ratio of 40% within the predetermined period of time T fails, electricity generated by fossil fuel is used as a current supplement, and adjustments are performed from the next predetermined period of time to achieve the renewable energy usage ratio of 40% within the usage ratio achievement period. For example, as illustrated in FIG. 5, in a case that the usage ratio achievement period for the user D1 identified by the user ID "U0001" is "ONE MONTH" and the usage ratio achievement period for the user A2 identified by the user ID "U0002" is "THREE MONTHS," the adjustment unit 55c1 preferentially allocates an amount of electricity to the user D1 of which the usage ratio achievement period is shorter than that of the user D2 to satisfy the renewable energy usage ratio for the user D1.

The calculation unit 57c1 searches the transaction details management table (see FIG. 5) in the storage unit 59c1, and reads one or more sets of data items indicating the same producer ID of one or more predetermined producers among the producers producing electricity by renewable energy, and then, reads one or more user IDs of one or more predetermined users each having entered into a transaction contract with the predetermined producer. As a result, the calculation unit 57c1 specifies the group F that is a combination of one or more predetermined producers and one or more predetermined users. For example, the calculation unit 57c1 searches the transaction details management table in the storage unit 59c1, and reads a set of data items indicating the producer ID "P0001" of the predetermined producer A1 and another set of data items indicating the producer ID "P0002" of the predetermined producer A2 in the transaction details management table among the producers A1, A2, and A3 that produce electricity by renewable energy, and then, reads user IDs "U0001" and "U0002" corresponding to predetermined users each having entered into transaction contracts with the predetermined producers A1 and A2. As a result, the calculation unit 57c1 specifies the group F that is a combination of four parties (entities), the predetermined producers A1 and A2 and the predetermined users D1 and D2.

The calculation unit 57c1 reads information on the renewable energy usage ratio requested by each of the predetermined users, from the transaction details management table. For example, the calculation unit 57c1 reads the renewable energy usage ratios "40" and "50" requested by the predetermined users, from the transaction details management table.

Further, the calculation unit 57c1 obtains an amount of total supply TSU by calculating, in intervals of predetermined time T (for example, in intervals of 30 minutes) using (Formula 1), the sum of amounts of supply $SU_i$ of electricity supplied by the producers in the same group F, among the amounts of electricity corresponding to the electricity (rights) obtained from the intermediary node 7c1 by the transmission and reception unit 51c1. In Formula 1, n represents the number of producers in the group F.

Formula 1:

$$TSU = \sum_{i=1}^{n} SU_i$$

Further, the calculation unit 57c1 obtains the amount of total supply TUS of electricity produced by renewable energy by calculating, using Formula 2, the sum of the amounts of usage $US_i$ of electricity that are amounts used by the users in the same group F, after multiplying each of the amounts of usage by the renewable energy usage ratio $UR_i$ that is agreed in the contract by the corresponding user, among the amounts of usage of electricity (rights) obtained from the intermediary node 7c1 by the transmission and reception unit 51c1. In (Formula 2), m represents the number of users (the number of consumers) in the group F.

Formula 2:

$$TUS = \sum_{i=1}^{m} US_i \times UR_i$$

Further, the calculation unit 57c1 calculates the amount of supply shortage SS of electricity produced by renewable energy by subtracting the amount of total supply from the amount of total usage for the same group F using Formula 3. In the description of the present embodiment, the amount of supply shortage SS of electricity indicates an amount of electricity shortage.

Amount of supply shortage SS = Amount of total usage TUS - Amount of total supply TSU (Formula 3)

Further, the amount of total usage may be subtracted from the amount of total supply.

Unlike renewable energy, fossil fuels can be easily used to generate electricity regardless of season and day or night. Further, the electricity that is generated by fossil fuels is not supplied to the user D as electricity generated by renewable energy, but the electricity that is generated by renewable energy can be supplied to the user D in excess of the renewable energy usage ratio. Accordingly, when the intermediary C1 provides the user D with (the rights of) electricity that was not generated by renewable energy, the likelihood of a shortage in the electricity to be supplied is low. However, in the case of a supply shortage of electricity, the amount of electricity shortage is calculated for the group F by a process substantially the same as the one described above using Formula 1 to Formula 3 described above.

Further, the group F may be not only a combination of multiple producers A and multiple users D, but also a combination of multiple producers A and a single predetermined user D, or a combination of a single predetermined producer A and multiple users D.

Intermediary System 5c2

As illustrated in FIG. 3, the intermediary system 5c2 includes a transmission and reception unit 51c2, an adjustment unit 55c2, and a calculation unit 57c2. The above-mentioned units are functions implemented by or caused to function by operating one or more of the components illustrated in FIG. 2 operating in accordance with an instruction of the CPU 101 according to the control program expanded from the SSD 104 to the RAM 103. The intermediary system 5c2 further includes a storage unit 59c2 (storage) implemented by the RAM 103 or the SSD 104.

The transmission and reception unit 51c2, the adjustment unit 55c2, and the calculation unit 57c2 have the same functions as the transmission and reception unit 51c1, the adjustment unit 55c1, and the calculation unit 57c1 described above, respectively, and thus the description thereof is omitted. The storage unit 59c2 stores or manages the same tables (see FIGS. 4 and 5) as the storage unit 59c1 described above, and thus the description thereof is omitted.

The transmission and reception unit 51c2 communicates, or exchanges data, with another apparatus (system).

User System

As illustrated in FIG. 3, the user system 5d is implemented by, for example, a smart meter, and includes a transmission and reception unit 51d and a measurement unit 53d. The above-mentioned units are functions implemented by or caused to function by operating one or more of the components illustrated in FIG. 2 operating in accordance with an instruction of the CPU 101 according to the control program expanded from the SSD 104 to the RAM 103.

The transmission and reception unit 51d communicates, or exchanges data, with another apparatus (system).

The measurement unit 53d, which is implemented by the measurement sensor 111, measures the amount of electricity consumption of one or more electric devices at fixed time intervals (for example, every 30 minutes).

Node

The functional configuration of each node is described below. Since the storage battery nodes 7f1, 7f2, and 7f3 have substantially the same configuration as that of, for example, the producer node 7a, the description thereof is omitted.

The producer node 7a includes a transmission and reception unit 71a and a storing and reading unit 78a. The producer node 7a further includes a storage unit 79a, implemented by the ROM 102, the RAM 103, or the SSD 104 illustrated in FIG. 2.

The transmission and reception unit 71d communicates, or exchanges data, with another apparatus (system).

The storing and reading unit 78a stores various data (or information) in the storage unit 79a and reads various data (or information) from the storage unit 79a.

The intermediary node 7c1, the intermediary node 7c2, and the user node 7d include transmission and reception units 71c1, 71c2, and 71d, respectively, each of which has substantially the same functions as those of the transmission and reception unit 71d, and thus the description thereof is omitted. The intermediary node 7c1, the intermediary node 7c2, and the user node 7d include storage and reading units 78c1, 78c2, and 78d, respectively, each of which has substantially the same functions as those of the storage and reading unit 78a, and thus the description thereof is omitted. The intermediary node 7c1, the intermediary node 7c2, and the user node 7d include the storage units 79c1, 79c2, and 79d, respectively, each of which is implemented by the ROM 102, the RAM 103, or the SSD 104 illustrated in FIG. 2 and has substantially the same functions as those of the storage unit 79a, and thus the description thereof is omitted.

Processing or Operation of Transaction System

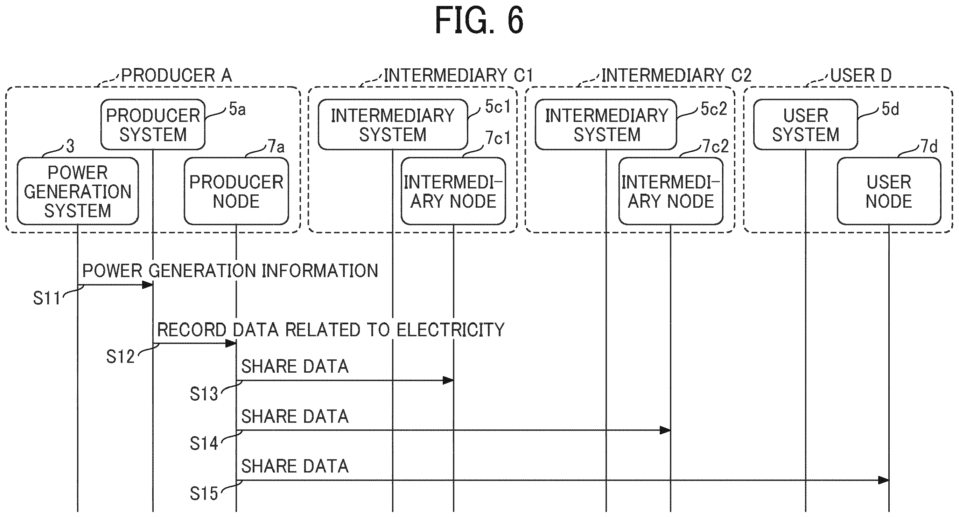

Referring to FIGS. 6 to 14, processing or operation performed by the transaction system 1 according to the present embodiment is described below. Each of the entities such as companies (for example, the producer A, the transaction market B, the intermediary C1 and C2, and the user D) can cause the owned node 7 to record (write) data, by making the systems and devices owned by the corresponding entity applicable to the write standard API. As a result, each entity can use the blockchain network 100. For example, in the case of the producer A in FIG. 1, a control panel of the power generation facility is made applicable to the write standard API, and accordingly, writing operation is performable from the control panel of the power generation facility on the producer node 7a. Alternatively, the producer system 5a may collect data on the amount of power generation of the power generation facility, and then writing operation from the producer system 5a on the producer node 7a can be performed.

Process for Interchanging Electricity

Referring to FIGS. 6 to 14, a series of processing for interchanging electricity between the intermediary C1 and the intermediary C2 is described. The processing described below with reference to FIGS. 6 to 14 is performed, for example, every 30 minutes per day. In the present embodiment, in order to maintain real-time performance, it is desired to use a mechanism with a short data write time (for example, a consortium blockchain network). The multiple intermediaries C can check data on an interchange or transaction of electricity (for example, data related to electricity (electricity-related data), data related to surplus electricity (surplus electricity-related data), data related to electricity shortage (electricity shortage-related data), such that the electricity can be interchanged between the multiple intermediaries C. In the description of the present embodiment, real-time performance indicates the time taken to complete the electricity transaction. In the case of Japan, since the aggregation of electricity is conducted every 30 minutes as of the fiscal year 2022, the real-time performance indicates that the calculation of the amount of power generation and the amount of consumption, and the transaction are completed in 30 minutes. This rule may be revised, and the definition of real-time performance may be changed in the future. For example, the time may be shortened to 15 minutes, namely in the intervals of 15 minutes, in the future.

This real-time performance introduces a new value, which has not been provided by power management using blockchain operations according to the related art.

For example, by visualizing a surplus or shortage of electricity in real time, the interchange of renewable energy for simultaneous equilibrium maintenance can be achieved. The blockchain ledger that has evidentiary characteristics can reduce the cost of credit in the transactions between entities (companies). This can lead to the reduction of risks arising for companies adopting renewable energy and facilitate the companies to adopt renewable energy, accordingly. As a result, investment in renewable energy is facilitated in the future.

In the following description of the present embodiment, a case in which the intermediary C conducts a direct transaction for electricity with the producer A without intervening in the transaction market B is given. The processing described below with reference to FIGS. 6 to 14 is performed every 30 minutes as described above. However, the prediction of the supply and demand of electricity is expected to be submitted one day in advance as part of the practical tasks of the intermediary (retailer). For this reason, for example, information on the amount of surplus electricity and the amount of electricity shortage may be generated based on prediction data from one day before. Moreover, agreements on the transaction of electricity may be made in advance based on the generated information.

Sharing Data related to Produced Electricity

Referring to FIG. 6, processing for sharing data related to electricity produced by the producer A, in the blockchain network 100, is described below. FIG. 6 is a sequence diagram illustrating processing for sharing electricity-related data that is data related to produced electricity, in the blockchain network 100, according to the present embodiment.

S11: In the power generation system 3, the measurement unit 33 measures the amount of power generation, and the transmission and reception unit 31 transmits power generation information indicating the measured amount of power generation to the producer system 5a. Accordingly, the transmission and reception unit 51a of the producer system 5a receives the power generation information.

S12: The transmission and reception unit 51a of the producer system 5a transmits to the producer node 7a electricity-related data that includes the power generation information. Accordingly, the transmission and reception unit 71a of the producer node 7a receives the electricity-related data, and the storing and reading unit 78a stores the electricity-related data in the storage unit 79a.

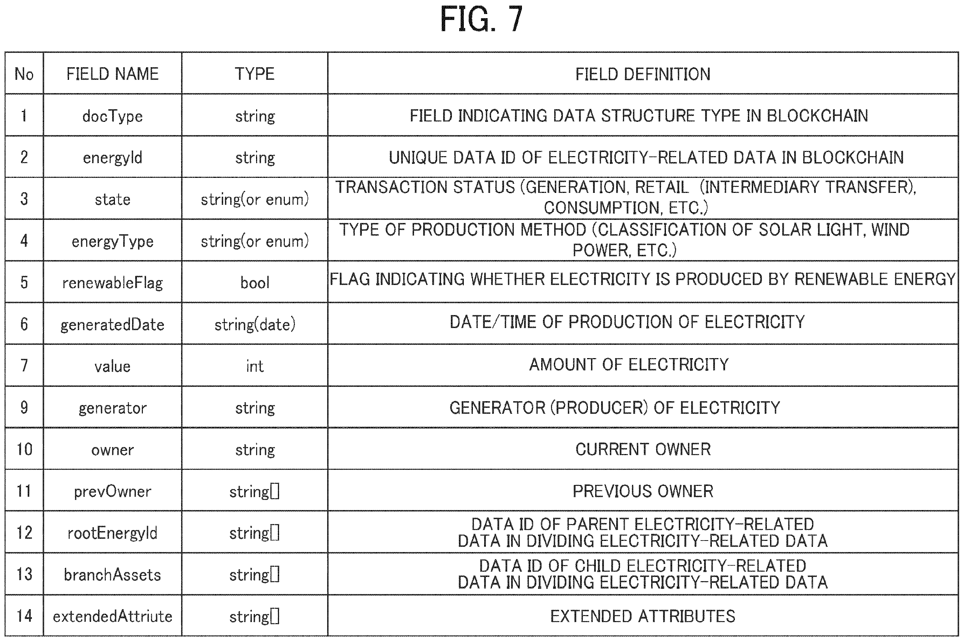

FIG. 7 is a diagram illustrating a data structure of the electricity-related data according to the present embodiment. As illustrated in FIG. 7, the electricity-related data includes a field indicating a data structure type in the blockchain, a unique data ID of the electricity-related data in the blockchain, a transaction status (for example, generation, retail (intermediary transfer), and consumption), a type of production method (classification of solar light, wind power, and other types), a flag indicating whether electricity is produced by renewable energy, a date and time of electricity production, an amount of electricity, a generator (producer) of electricity, a current owner of electricity, a previous owner of electricity, a data ID of parent electricity-related data in dividing the electricity-related data, a data ID of child electricity-related data in dividing the electricity-related data, and extended attributes. For example, in the case where the amount of produced electricity is 10 kWh, and the intermediary C1 sells (intermediates the transfer of) 6 kWh of electricity to the user D from the amount of produced electricity, the parent electricity-related data indicating 4 kWh of electricity and the child electricity-related data indicating 6 kWh of electricity are generated and then managed with data IDs assigned, as illustrated in FIG. 7.

Further, for example, the transaction status, the current owner of the electricity, and the previous owner of the electricity in the data structure illustrated in FIG. 7 are "GENERATION," "intermediary C1," and "producer A," respectively.

In the example illustrated in FIG. 7, the flag "renewableFlag" is disabled for electricity produced by both renewable energy and non-renewable energy (for example, fossil fuels). The intermediary C2 may generate surplus electricity for renewable energy and surplus electricity for non-renewable energy for each time, or may sell the surplus electricity for non-renewable energy to Japan Wholesale Electric Power Exchange (JEPX) without generating data related to the surplus electricity for non-renewable energy.

S13: The transmission and reception unit 71a of the producer node 7a transmits the electricity-related data to the intermediary node 7c1. Accordingly, the transmission and reception unit 71c1 of the intermediary node 7c1 receives the electricity-related data, and the storing and reading unit 78c1 stores the electricity-related data in the storage unit 79c1. This results in data sharing.

S14: The transmission and reception unit 71a of the producer node 7a transmits the electricity-related data to the intermediary node 7c2. Accordingly, the transmission and reception unit 71c2 of the intermediary node 7c2 receives the electricity-related data, and the storing and reading unit 78c2 stores the electricity-related data in the storage unit 79c2. This results in data sharing.

S15: The transmission and reception unit 71a of the producer node 7a transmits the electricity-related data to the user node 7d. The transmission and reception unit 71d of the user node 7d receives the electricity-related data, and the storing and reading unit 78d stores the electricity-related data in the storage unit 79d. This results in data sharing.

Sharing Data Related to Consumed Electricity

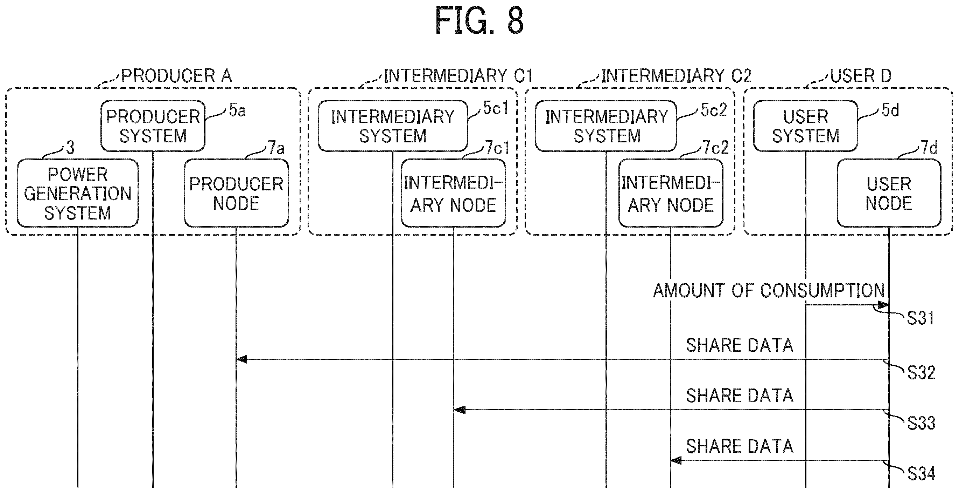

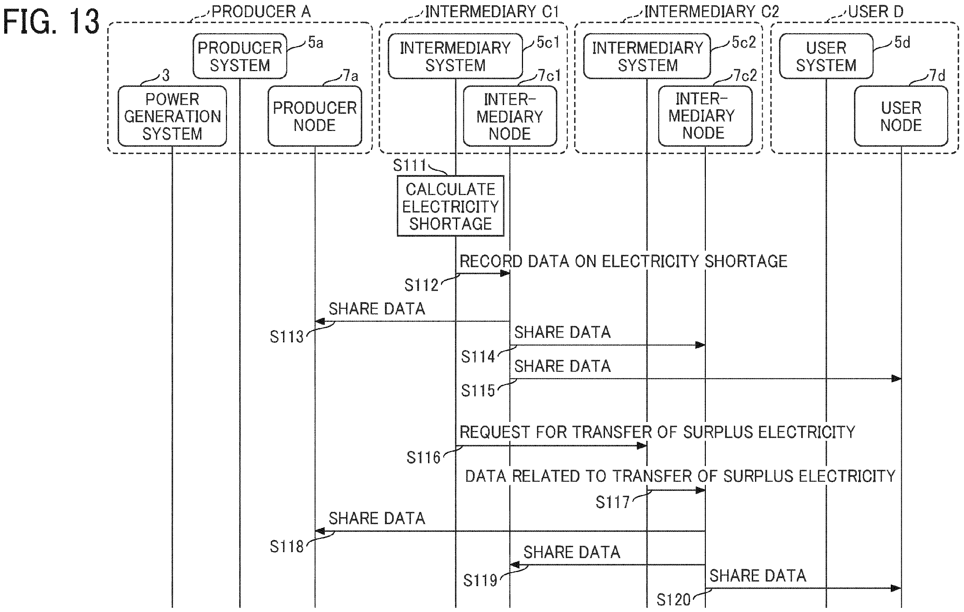

Referring to FIG. 8, processing for sharing data related to electricity consumed by the user D, in the blockchain network 100, is described below. FIG. 8 is a sequence diagram illustrating processing for sharing electricity-related data that is data related to consumed electricity, in the blockchain network 100, according to the present embodiment. In terms of the temporal flow of processing, the processing in FIG. 8 is performed after the processing in FIG. 13.

S31: In the user system 5d, the measurement unit 53d measures the amount of electricity consumption (amount of consumption), and the transmission and reception unit 51d transmits to the user node 7d electricity-related data that indicates the amount of consumption measured by the measurement unit 53d. Accordingly, the transmission and reception unit 71d of the user node 7d receives the electricity-related data, and the storing and reading unit 78d stores the electricity-related data in the storage unit 79d. In this case, the transaction status, the current owner of the electricity, and the previous owner of the electricity in the data structure illustrated in FIG. 7 are "CONSUMPTION," "user D," and "intermediary C1," respectively.

S32: The transmission and reception unit 71d of the user node 7d transmits the electricity-related data to the producer node 7a. Accordingly, the transmission and reception unit 71a of the producer node 7a receives the electricity-related data, and the storing and reading unit 78a stores the electricity-related data in the storage unit 79a. This results in data sharing.

S33: The transmission and reception unit 71d of the user node 7d transmits the electricity-related data to the intermediary node 7c1. Accordingly, the transmission and reception unit 71c1 of the intermediary node 7c1 receives the electricity-related data, and the storing and reading unit 78c1 stores the electricity-related data in the storage unit 79c1. This results in data sharing.

S34: The transmission and reception unit 71d of the user node 7d transmits the electricity-related data to the intermediary node 7c2. Accordingly, the transmission and reception unit 71c2 of the intermediary node 7c2 receives the electricity-related data, and the storing and reading unit 78c2 stores the electricity-related data in the storage unit 79c2. This results in data sharing.

Sharing Data Related to Intermediated Electricity

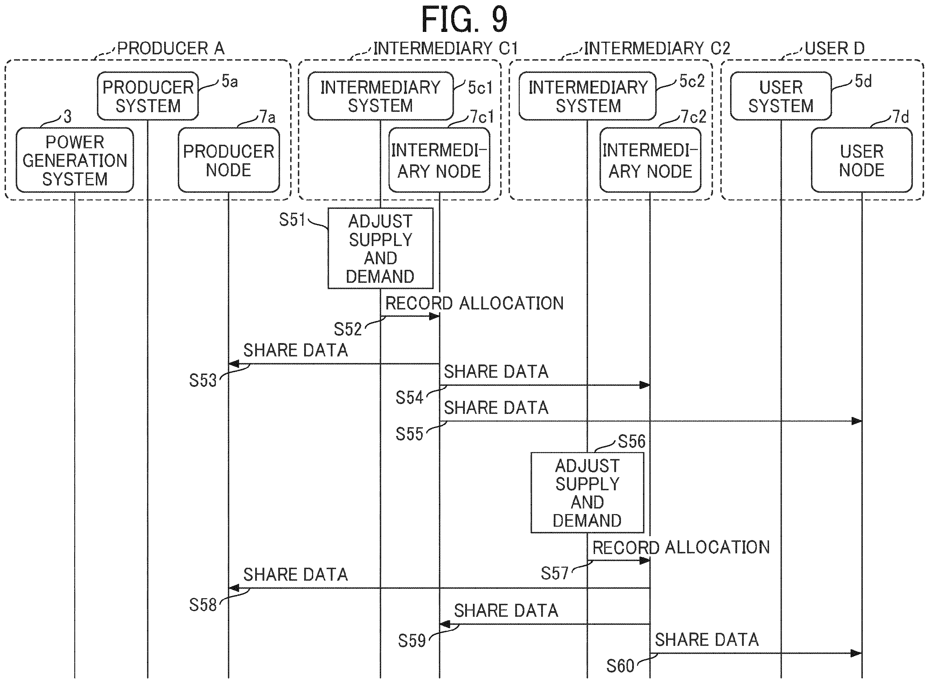

Referring to FIG. 9, processing for sharing data related to electricity intermediated by the intermediary C1 or C2, in the blockchain network 100, is described below. FIG. 9 is a sequence diagram illustrating processing for sharing electricity-related data that is data related to intermediated electricity, in the blockchain network 100, according to the present embodiment.

S51: In the intermediary system 5c1, the adjustment unit 55c1 performs supply and demand adjustments for allocating to the user D an amount of electricity by considering the type of production method for electricity (classification of solar light, wind power, and other types) in accordance with the contract details with the user D, among the total amount of electricity currently owned by the intermediary C1.

S52: In the intermediary system 5c1, the transmission and reception unit 51c1 transmits to the intermediary node 7c1 electricity-related data indicating data allocated as a result of the supply and demand adjustments performed by the adjustment unit 55c1. Accordingly, the transmission and reception unit 71c1 of the intermediary node 7c1 receives the electricity-related data, and the storing and reading unit 78c1 stores the electricity-related data in the storage unit 79c1. In this case, the transaction status, the current owner of the electricity, and the previous owner of the electricity in the data structure illustrated in FIG. 7 are "RETAIL, (INTERMEDIARY TRANSFER)," "intermediary C1," and "producer A," respectively.

S53: The transmission and reception unit 71c1 of the intermediary node 7c1 transmits the electricity-related data to the producer node 7a. Accordingly, the transmission and reception unit 71a of the producer node 7a receives the electricity-related data, and the storing and reading unit 78a stores the electricity-related data in the storage unit 79a. This results in data sharing.

S54: The transmission and reception unit 71c1 of the intermediary node 7c1 transmits the electricity-related data to the intermediary node 7c2. Accordingly, the transmission and reception unit 71c2 of the intermediary node 7c2 receives the electricity-related data, and the storing and reading unit 78c2 stores the electricity-related data in the storage unit 79c2. This results in data sharing.

S55: The transmission and reception unit 71c1 of the intermediary node 7c1 transmits the electricity-related data to the user node 7d. Accordingly, the transmission and reception unit 71d of the user node 7d receives the electricity-related data, and the storing and reading unit 78d stores the electricity-related data in the storage unit 79d. This results in data sharing.

In the case of intermediary C2, the substantially same processing as that performed for intermediary C1 is performed (Steps S56 to S60).

Sharing Data Related to Surplus Electricity

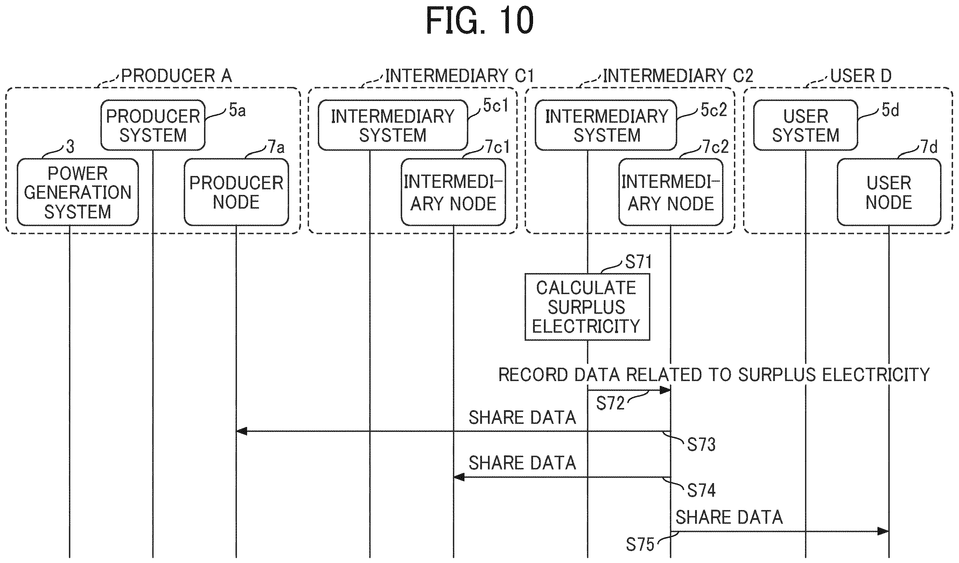

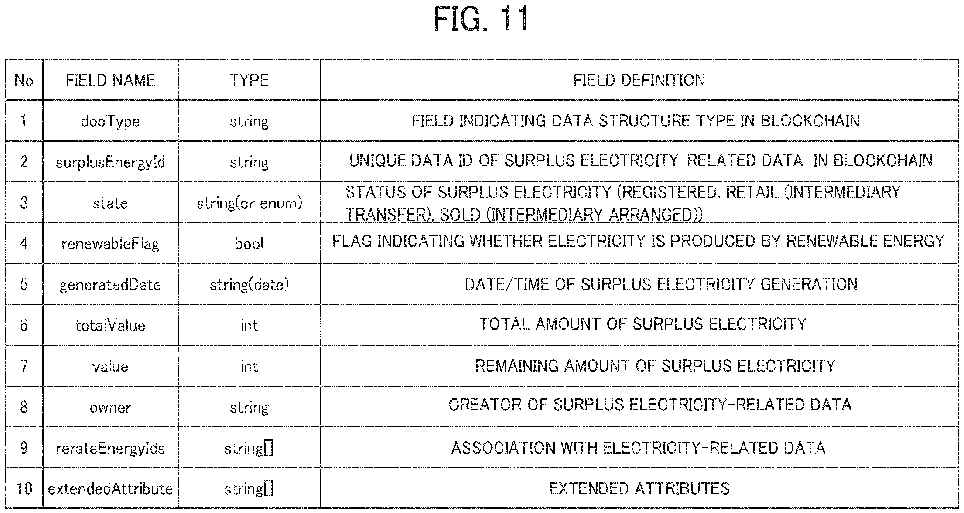

Referring to FIGS. 10 and 11, processing for sharing data related to surplus electricity in the blockchain network 100, performed by the intermediary C2, is described below. FIG. 10 is a sequence diagram illustrating processing for sharing data related to surplus electricity, in the blockchain network 100, according to the present embodiment.

In the following description of the present embodiment, a case in which the electricity owned by the intermediary C2 (electricity produced by renewable energy) is surplus is given.

S71: In the intermediary system 5c2, the calculation unit 57c2 calculates the amount of surplus electricity that is the amount of electricity remaining even after electricity is supplied to the user D according to the contract, from the total amount of electricity currently owned by the intermediary C2.

S72: In the intermediary system 5c2, the transmission and reception unit 51c2 transmits the data related to surplus electricity calculated by the calculation unit 57c2 to the intermediary node 7c2. The data related to surplus electricity includes a flag indicating whether the electricity is generated by renewable energy. Accordingly, the transmission and reception unit 71c2 of the intermediary node 7c2 receives the data related to surplus electricity, and the storing and reading unit 78c2 stores the data related to surplus electricity in the storage unit 79c2.

FIG. 11 is a table illustrating a data structure of the data related to surplus electricity ("surplus electricity-related data") according to the present embodiment. As illustrated in FIG. 11, the surplus electricity-related data includes a field indicating a data structure type in the blockchain, a unique data ID of the surplus electricity-related data in the blockchain, a status of surplus electricity (for example, registered, retail (intermediary transfer), sold (intermediary arranged)), a flag indicating whether the electricity is produced by renewable energy, a date and time of surplus electricity generation, a total amount of surplus electricity, a remaining amount of surplus electricity, a creator of the surplus electricity-related data, association with electricity-related data (see FIG.

7), and extended attributes.

The "date and time of surplus electricity generation" indicates a date and time when surplus electricity is generated by the intermediary C2. The "total amount of surplus electricity" indicates the total amount of electricity that remains even after electricity is supplied to the user D according to the contract, from the total amount of electricity currently owned by the intermediary C2. The "remaining amount of surplus electricity" indicates an amount of surplus electricity that is remained at the current point in time, out of the total amount of surplus electricity. When the surplus electricity-related data is also shared with the intermediary C1, the intermediary C1 refers to the "flag indicating whether the electricity is produced by renewable energy" and the "remaining amount of surplus electricity," to grasp an amount of electricity (electricity produced by renewable energy) that can be transferred from the intermediary C2.

S73: The transmission and reception unit 71c2 of the intermediary node 7c2 transmits the surplus electricity-related data to the producer node 7a. Accordingly, the transmission and reception unit 71a of the producer node 7a receives the surplus electricity-related data, and the storing and reading unit 78a stores the surplus electricity-related data in the storage unit 79a. This results in data sharing.

S74: The transmission and reception unit 71c2 of the intermediary node 7c2 transmits the surplus electricity-related data to the intermediary node 7c1. Accordingly, the transmission and reception unit 71c1 of the intermediary node 7c1 receives the surplus electricity-related data, and the storing and reading unit 78c1 stores the surplus electricity-related data in the storage unit 79c1. This results in data sharing.

S75: The transmission and reception unit 71c2 of the intermediary node 7c2 transmits the surplus electricity-related data to the user node 7d. Accordingly, the transmission and reception unit 71d of the user node 7d receives the surplus electricity-related data, and the storing and reading unit 78d stores the surplus electricity-related data in the storage unit 79d. This results in data sharing.

Sharing Data Related to Electricity Shortage and Sharing Data Related to Transfer of Surplus Electricity

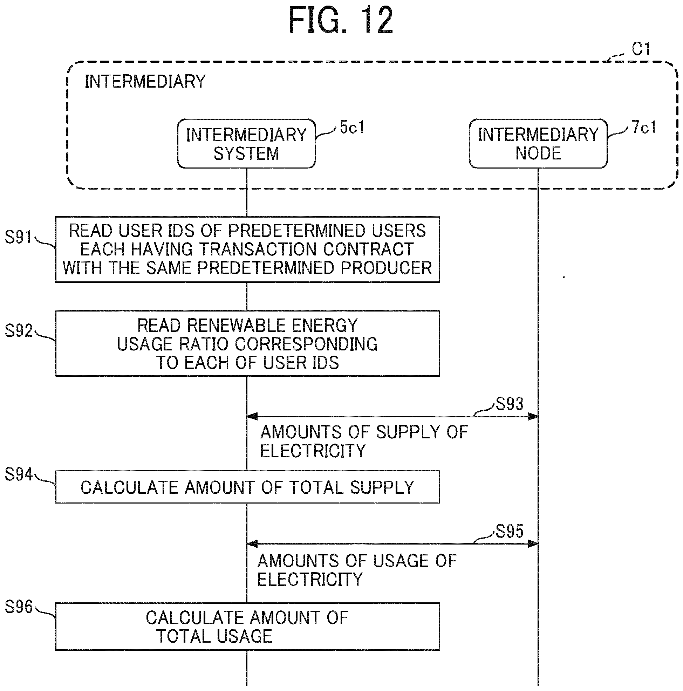

Referring to FIGS. 12 to 14, processing for sharing data related to electricity shortage in the blockchain network 100, performed by the intermediary C1, and processing for sharing data related to a transfer of surplus electricity performed by the intermediary C2, are described below. FIG. 12 is a sequence diagram illustrating processing for calculating an amount of total supply and an amount of total usage according to the present embodiment. FIG. 13 is a sequence diagram illustrating processing for sharing data related to electricity shortage and processing for sharing data related to a transfer of surplus electricity, in the blockchain network 100, according to the present embodiment. In the following description of the present embodiment, a case in which the electricity owned by the intermediary C1 (electricity produced by renewable energy) is insufficient is described.

S91: When the intermediary C1 intermediates the transfer of electricity (rights) from multiple producers A to multiple users D, the calculation unit 57c1 of the intermediary system 5c1 reads user IDs of predetermined users each having entered into a transaction contract with the same predetermined producer, from the transaction details management table (see FIG. 5) in the storage unit 59c1, as illustrated in FIG. 12.

S92: Further, the calculation unit 57c1 reads a renewable energy usage ratio corresponding to each of the user IDs of the predetermined users from the transaction details management table.

S93: The transmission and reception unit 51c1 accesses the intermediary node 7c1 at fixed time intervals (for example, every 30 minutes), and acquires the latest data on each amount of supply of electricity of the corresponding one of the predetermined producers.

S94: The calculation unit 57c1 obtains the amount of total supply by calculating the sum of the amounts of supply acquired by the transmission and reception unit 51c1, using Formula 1 described above.

S95: The transmission and reception unit 51c1 accesses the intermediary node 7c1 at the same fixed time intervals (for example, every 30 minutes) as in the processing of Step S93, and acquires the latest data on each amount of usage (amount of consumption) of electricity of the corresponding one of the predetermined users.

S96: The calculation unit 57c1 obtains the amount of total usage by calculating the sum of the amounts of usage acquired by the transmission and reception unit 51c1, using Formula 2 described above.

S111: Referring to FIG. 13, in the intermediary system 5c1, the calculation unit 57c1 calculates, using Formula 3 described above, the amount of electricity shortage of the electricity to be supplied to each of the predetermined users D according to the corresponding contract from the intermediary C1. In this case, as described above, the amount of electricity shortage of the electricity to be supplied to each of the users D is calculated, after the predetermined users are prioritized based on the usage ratio achievement periods. Then, when specific one or more of the predetermined users D facing shortages of electricity to be supplied are present among the predetermined users D, the processing of S112 and the subsequent processing are performed. When no specific user D is facing a shortage of electricity to be supplied, the processing illustrated in FIG. 9 is performed.

S112: In the intermediary system 5c1, the transmission and reception unit 51c1 transmits data related to electricity shortage calculated by the calculation unit 57c1 to the intermediary node 7c1. The data related to electricity shortage includes a flag indicating whether the electricity is generated by renewable energy. Accordingly, the transmission and reception unit 71c1 of the intermediary node 7c1 receives the data related to electricity shortage, and the storing and reading unit 78c1 stores the data related to electricity shortage in the storage unit 79c1.

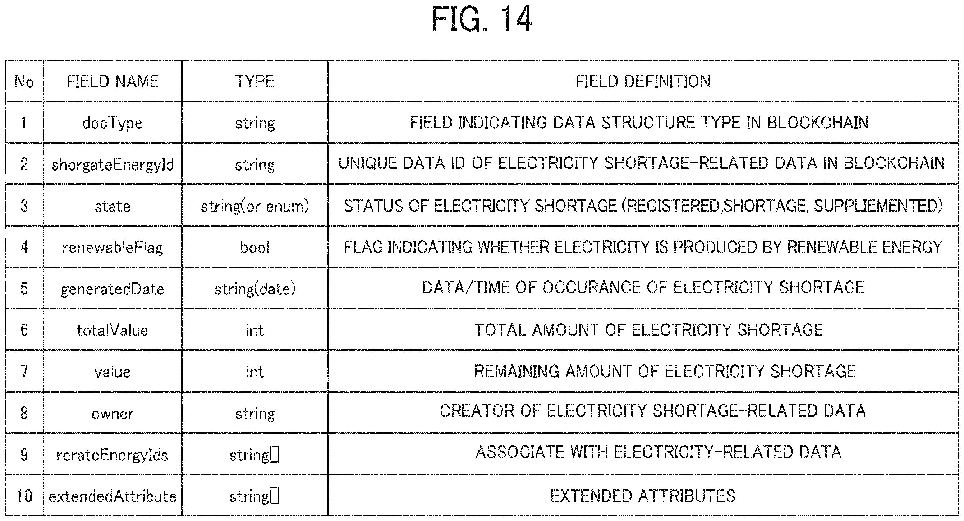

FIG. 14 is a diagram illustrating a data structure of data related to electricity shortage ("electricity shortage-related data") according to the present embodiment. As illustrated in FIG. 14, the electricity shortage-related data includes a field indicating a data structure type in the blockchain, a unique data ID of the electricity shortage-related data in the blockchain, a status of electricity shortage (for example, registered, under shortage, supplemented), a flag indicating whether the electricity is produced by renewable energy, a date and time of occurrence of electricity shortage, a total amount of electricity shortage, a remaining amount of electricity shortage, a creator of the electricity shortage-related data, association with electricity-related data (see FIG. 7), and extended attributes.

The "date and time of occurrence of electricity shortage" indicates a date and time when a shortage of electricity occurs by the intermediary agent C1. The "total amount of electricity shortage" indicates the total amount of electricity corresponding to electricity unavailable to be supplied due to the shortage, out of the total amount of electricity corresponding to the electricity planned to be supplied from the intermediary C1 to the user D according to the contract. The "remaining amount of electricity shortage" indicates an amount of electricity shortage that remains at the current point in time, out of the total amount of electricity shortage, as a result of the interchange of electricity from another intermediary such as the intermediary C2.

S113: The transmission and reception unit 71c1 of the intermediary node 7c1 transmits the electricity shortage-related data to the producer node 7a. Accordingly, the transmission and reception unit 71a of the producer node 7a receives the electricity shortage-related data, and the storing and reading unit 78a stores the electricity shortage-related data in the storage unit 79a. This results in data sharing.

S114: The transmission and reception unit 71c1 of the intermediary node 7c1 transmits the electricity shortage-related data to the intermediary node 7c2. Accordingly, the transmission and reception unit 71c2 of the intermediary node 7c2 receives the electricity shortage-related data, and the storing and reading unit 78c2 stores the electricity shortage-related data in the storage unit 79c2. This results in data sharing.

S115: The transmission and reception unit 71c1 of the intermediary node 7c1 transmits the electricity shortage-related data to the user node 7d. Accordingly, the transmission and reception unit 71d of the user node 7d receives the electricity shortage-related data, and the storing and reading unit 78d stores the electricity shortage-related data in the storage unit 79d. This results in data sharing.

S116: In the intermediary system 5c1, the adjustment unit 55c1 recognizes the amount of transferable electricity within the range of the amount of surplus electricity, based on the surplus electricity-related data that is shared through the processing of Step S74, and the transmission and reception unit 51c1 of the intermediary system 5c1 transmits to the intermediary system 5c2 a request for the transfer of surplus electricity owned by the intermediary C2 at the current point in time. The request for the transfer includes information on the name of the requester of the request, and the amount of electricity for which the transfer is requested. Accordingly, the transmission and reception unit 51c2 of the intermediary system 5c2 receives the request for the transfer of surplus electricity.

S117: In the intermediary system 5c2, the calculation unit 57c2 determines whether an amount of electricity equivalent to the amount requested by the intermediary system 5c1 can be transferred. In the case the amount of electricity equivalent to the amount requested is transferrable, the transmission and reception unit 51c2 transmits to the intermediary node 7c2 data related to surplus electricity ("surplus electricity-related data") corresponding to the amount of electricity equivalent to the amount requested by the intermediary system 5c1. Accordingly, the transmission and reception unit 71c2 of the intermediary node 7c2 receives the data related to surplus electricity, and the storing and reading unit 78c2 stores the data related to surplus electricity in the storage unit 79c2. In this case, the transaction status, the current owner of the electricity, and the previous owner of the electricity in the data structure illustrated in FIG. 11 are "RETAIL, (INTERMEDIARY TRANSFER)," "intermediary C1," and "intermediary C2," respectively. Further, the "remaining amount of surplus electricity" is also updated.

S118: The transmission and reception unit 71c2 of the intermediary node 7c2 transmits the surplus electricity-related data to the producer node 7a. Accordingly, the transmission and reception unit 71a of the producer node 7a receives the surplus electricity-related data, and the storing and reading unit 78a stores the surplus electricity-related data in the storage unit 79a. This results in data sharing.

S119: The transmission and reception unit 71c2 of the intermediary node 7c2 transmits the surplus electricity-related data to the intermediary node 7c1. Accordingly, the transmission and reception unit 71c1 of the intermediary node 7c1 receives the surplus electricity-related data, and the storing and reading unit 78c1 stores the surplus electricity-related data in the storage unit 79c1. This results in data sharing.

S120: The transmission and reception unit 71c2 of the intermediary node 7c2 transmits the surplus electricity-related data to the user node 7d. Accordingly, the transmission and reception unit 71d of the user node 7d receives the surplus electricity-related data, and the storing and reading unit 78d stores the surplus electricity-related data in the storage unit 79d. This results in data sharing.

As described above, according to the present embodiment, when not having the ownership of a specific asset produced by a specific type of production method, the intermediary system 5c1 can receive the specific asset from the intermediary system 5c2, and accordingly, the supply and demand in transactions of the assets can be managed in real time. This can reduce the increase in the fee for an asset or prevent an unnecessary generation of the asset that is not to be used.

Further, by constructing the blockchain network 100, data on an interchange or transaction of renewable energy (for example, data related to electricity (electricity-related data), data related to surplus electricity (surplus electricity-related data), data related to electricity shortage (electricity shortage-related data) are recorded to establish evidentiality, and this can leave the evidence of the usage of renewable energy. The mechanism provided by the blockchain network 100 can serve as a means to certify the value of renewable energy other than serving as a certificate. The mechanism can be a means to ensure evidentiality at a low cost compared to the cost of issuing a certificate, through system automation. Further, unlike the certificates, the mechanism can facilitate the usage of renewable energy by adding the value of renewable energy to real electricity. Further, the mechanism can distinguish cases where, for example, the value of renewable energy is allocated after using fossil fuels, such as petroleum. By standardizing the mechanism using the blockchain network 100, a mechanism in which each entity (company) can easily participate in using renewable energy can be created. There are new stakeholders of various types of energy, who have conceptual ideas, such as balancing the supply-demand of renewable energy among multiple companies, but have not yet implemented such conceptual ideas in practical business operations. Such conceptual ideas can be achieved by providing APIs to such stakeholders, and this can lead to the creation of new businesses.

Further, as another method for interchanging electricity, such as the above-described method, for example, a method for adjusting electricity among multiple entities (companies) that are aggregated by an aggregator is known in the art. However, each of the aggregated entities (for example, electric power companies) establishes a separate contractual relationship to use this method, and this may limit the scope of adjustment. An advantage of using blockchain technology is that the blockchain network 100 itself has characteristics to establish evidentiality and contractual relationships, and this allows companies to execute flexible transactions via blockchain ledgers by the blockchain network 100.

Further, in any one of the above-described embodiments, electricity is used as an asset, but an asset is not limited to this. As described below, examples of the asset include an asset that exists physically (or in reality)) and an asset that does not exist physically (or in reality). The data related to electricity (electricity-related data) serves as data related to the asset. The data related to surplus electricity (surplus electricity-related data) serves as data related to a surplus of the asset. The data related to electricity shortage (electricity shortage-related data) serves as data related to a shortage of the asset.

Examples of the asset that exists physically (or in reality) include food items such as grains, vegetables, fruits, meat, seafood, and processed products. When the asset is grains, vegetables, or fruits, the data related to the asset includes, as the "type of production method," supplementary information such as information indicating whether pesticides were used or information indicating the producer or the place of production.

When the asset is meat, the data related to the asset includes, as the "type of production method," supplementary information such as information indicating whether the meat is from an animal raised using genetically modified crops or information indicating the producer or the place of production.

When the asset is seafood such as fish or shellfish, the data related to the asset includes, as the "type of production method," supplementary information such as information indicating whether the seafood is natural or aquaculture origin or information indicating the producer (fisherman) or the production area (fishing area).

When the asset is processed products, the data related to the asset includes, as the "type of production method," supplementary information such as information indicating an allergen, information indicating whether the product has been processed using genetically modified crops, or information indicating the location of the processor or the processing plant.

Further, examples of the asset that exists physically (or in reality) include real estate, such as land and buildings, and movable property such as goods or quantities of goods.

When the asset is real estate, the data related to the asset includes supplementary information indicating, for example, ownership rights. When the asset is movable property, the data related to the asset includes supplementary information indicating, for example, ownership rights.

On the other hand, examples the asset that does not exist physically (or in reality) include tokens (virtual currency) or quantities of tokens, carbon dioxide emission credits, intellectual property rights, and contracts.

When the asset is one or more tokens, the data related to the asset includes supplementary information indicating, for example, ownership rights.

When the asset is one or more carbon dioxide emission credits, the data related to the asset includes supplementary information indicating, for example, ownership rights.

When the asset is one or more rights such as an intellectual property right, the data related to the asset includes supplementary information indicating, for example, the holder of the rights, the assignee of the rights, and the licensee.

When the asset is one or more contracts, the data related to the asset includes supplementary information indicating, for example, contract conditions and performance statuses. Further, not only contracts, but also treaties, agreements, commitments, memorandums (memos), notes, and other similar documents may be treated as an asset in substantially the same manner as contracts.

Further, as an asset involving post-payment processing, the asset may be, for example, gas, tap water, or communication, in addition to electricity. In the case of gas, water, or communication, the data related to the asset includes supplementary information indicating, for example, ownership rights.

Further, the electricity produced by solar light serves as an asset produced by a specific type of production method. Examples of the asset produced by the specific type of production method include an asset produced by any one of various "types of production methods" as described above.

Further, the CPU 101 may be a single device or multiple devices.

Further, each of the functions of the above-described embodiments may be implemented by one or more processing circuits or circuitry. Processing circuitry includes a programmed processor, as a processor includes circuitry. A processing circuit also includes devices such as an application-specific integrated circuit (ASIC), a digital signal processor (DSP), a field-programmable gate array (FPGA), a system on a chip (SOC), a graphics processing unit (GPU), and conventional circuit components arranged to perform the recited functions.

Further, any of the above-described programs may be stored in a (non-transitory) recording medium for distribution.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general-purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid-state memory device.

## Claims

1. An intermediary system (5c1) of an intermediary for intermediating transactions of an asset between a supplier of the asset and a user of the asset, the intermediary system (5c1) comprising:

   a reception unit (51c 1, 102) configured to

   receive, through a blockchain network, each of a plurality of amounts of supply for a specific asset produced by a specific type of production method, each of the plurality of amounts of supply being supplied by a corresponding one of a plurality of suppliers within a fixed period, and
   receive, through the blockchain network, an amount of usage of the specific asset used by a predetermined user within the fixed period; and

   a transmission unit (51c1, 102) configured to transmit, to another intermediary system (5c2) of another intermediary, a request for transfer of the specific asset corresponding to an amount of shortage of the specific asset based on a shortage of the specific asset to be intermediated to the predetermined user, the shortage being indicated by a difference between a sum of the plurality of amounts of supply and the amount of usage.

2. The intermediary system (5c1) of claim 1, wherein each of the plurality of suppliers and the predetermined user have previously entered into a transaction contract for the specific asset.

3. An intermediary system (5c1) of an intermediary for intermediating transactions of an asset between a supplier of the asset and a user of the asset, the intermediary system (5c1) comprising:

   a reception unit (51c1, 102) configured to

   receive, through a blockchain network, an amount of supply for a specific asset produced by a specific type of production method, the amount of supply being supplied by a predetermined supplier within a fixed period, and

receive, through the blockchain network, each of a plurality of amounts of usage of the specific asset used by a corresponding one of a plurality of users within the fixed period; and

a transmission unit (51c1, 102) configured to transmit, to another intermediary system (5c2) of another intermediary, a request for transfer of the specific asset corresponding to an amount of shortage of the specific asset based on a shortage of the specific asset to be intermediated a specific one of the plurality of users, the shortage being indicated by a difference between the amount of supply and a sum of the plurality of amounts of usage.

4. The intermediary system (5c1) of claim 3, wherein the supplier and each of the plurality of users have previously entered into a transaction contract for the specific asset.

5. An intermediary system (5c1) of an intermediary for intermediating transactions of an asset between a supplier of the asset and a user of the asset, the intermediary system (5c1) comprising:

a reception unit (51c1, 102) configured to

receive, through a blockchain network, each of a plurality of amounts of supply for a specific asset produced by a specific type of production method, each of the plurality of amounts of supply being supplied by a corresponding one of a plurality of suppliers within a fixed period, and receive, through the blockchain network, each of a plurality of amounts of usage of the specific asset used by a corresponding one of a plurality of users within the fixed period; and

a transmission unit (51c1, 102) configured to transmit, to another intermediary system (5c2) of another intermediary, a request for transfer of the specific asset corresponding to an amount of shortage of the specific asset based on a shortage of the specific asset to be intermediated a specific one of the plurality of users, the shortage being indicated by a difference between a sum of the plurality of amounts of supply and a sum of the plurality of amounts of usage.

6. The intermediary system (5c1) of claim 5, wherein each of the plurality of suppliers and each of the plurality of users have previously entered into a transaction contract for the specific asset.

7. The intermediary system (5) of any one of claims 1 to 6, wherein the specific asset is electricity that is produced by renewable energy.

8. A transaction system (1), comprising:

the intermediary system (5c1) of any one of claims 1 to 6; and
the other intermediary system (5c2).

9. A requesting method performed by an intermediary system (5c1) of an intermediary, the intermediary system (5c1) intermediating transactions of an asset between a supplier of the asset and a user of the asset, the method comprising:

receiving (S11), through a blockchain network, each of a plurality of amounts of supply for a specific asset produced by a specific type of production method, each of the plurality of amounts of supply being supplied by a corresponding one of a plurality of suppliers within a fixed period; receiving (S33), through the blockchain network, an amount of usage of the specific asset used by a predetermined user within the fixed period; and transmitting (S116), to another intermediary system (5c2) of another intermediary, a request for transfer of the specific asset corresponding to an amount of shortage of the specific asset based on a shortage of the specific asset to be intermediated to the predetermined user, the shortage being indicated by a difference between a sum of the plurality of amounts of supply and the amount of usage.

# FIG. 1

TRANSACTION SYSTEM 1

MARKET TRANSACTION

B
TRANSACTION MARKET
5b
MARKET SYSTEM

ORDER
SELL

C
INTERMEDIARY

A
PRODUCER
5a
PRODUCER SYSTEM

C1
INTERMEDIARY
INTERMEDIARY SYSTEM
5c1

D
CONSUMER (USER)
5d
USER SYSTEM

E
CERTIFICA-TION AUTHORITY
5e
CA SYSTEM

ORDER
SELL

DIRECT TRANSACTION

REQUEST FOR SURPLUS ELECTRICITY

CHARGE

DISCHARGE

C2
INTERMEDIARY
INTERMEDIARY SYSTEM

CHARGE

DISCHARGE

5f1
STORAGE BATTERY SYSTEM

5f2
STORAGE BATTERY SYSTEM

CHARGE

5f3
STORAGE BATTERY SYSTEM

DISCHARGE

DISCHARGE

5c2

RECORD | RECORD | RECORD | RECORD | RECORD | RECORD | RECORD | RECORD

PRODUCER NODE
7a

BATTERY NODE
7f1

MARKET NODE
7b

BATTERY NODE
7f2

INTERMEDIARY NODE
7c1

INTERMEDIARY NODE
7c2

BATTERY NODE
7f3

USER NODE
7d

MONITOR

BLOCKCHAIN NETWORK (COMMON DATA INFRASTRUCTURE) 100

EP 4 432 206 A1

# FIG. 2

```
┌─────────────────────────────────────────────────────────────────────────┐
│  ┌──────────┐  ┌──────────┐  ┌──────────┐  ┌──────────┐  ┌──────────────┐ │
│  │  ~101    │  │  ~102    │  │  ~103    │  │  ~104    │  │  ~111        │ │
│  │   CPU    │  │   ROM    │  │   RAM    │  │   SSD    │  │ MEASUREMENT  │ │
│  │          │  │          │  │          │  │          │  │   SENSOR     │ │
│  └────┬─────┘  └────┬─────┘  └────┬─────┘  └────┬─────┘  └──────┬───────┘ │
│       │             │             │             │              │   ~110  │
│  ─────┴─────────────┴─────────────┴─────────────┴──────────────┴──────── │
│       │             │             │             │              │         │
│  ┌────┴─────┐  ┌─────┴────┐  ┌─────┴────┐  ┌─────┴────┐  ┌──────┴───────┐ │
│  │ ~105     │  │ ~106     │  │ ~107     │  │ ~108     │  │ ~109         │ │
│  │ EXTERNAL │  │          │  │          │  │          │  │              │ │
│  │ DEVICE   │  │ NETWORK  │  │ DISPLAY  │  │  INPUT   │  │  MEDIUM I/F  │ │
│  │CONNECTION│  │   I/F    │  │          │  │  DEVICE  │  │              │ │
│  │   I/F    │  │          │  │          │  │          │  │              │ │
│  └──────────┘  └──────────┘  └──────────┘  └──────────┘  └──────┬───────┘ │
│                                                                  ↕        │
│                                                           ┌─────────┐~109m│
│                                                           │ MEDIUM  │     │
│                                                           └─────────┘     │
└─────────────────────────────────────────────────────────────────────────┘
```

EP 4 432 206 A1

# FIG. 3

POWER GENERATION SYSTEM /3

MEASUREMENT UNIT /33

TRANSMISSION AND RECEPTION UNIT /31

TRANSMISSION AND RECEPTION UNIT /5a

PRODUCER SYSTEM /51a

INTERMEDIARY SYSTEM /5c1

STORAGE /59c1

ADJUST-MENT UNIT /55c1

CALCULA-TION UNIT /57c1

TRANSMISSION AND RECEPTION UNIT /51c1

INTERMEDIARY SYSTEM /5c2

STORAGE /59c2

ADJUST-MENT UNIT /55c2

CALCULA-TION UNIT /57c2

TRANSMISSION AND RECEPTION UNIT /51c2

TRANSACTION SYSTEM 1

USER SYSTEM /5d

MEASUREMENT UNIT /53d

TRANSMISSION AND RECEPTION UNIT /51d

TRANSMISSION AND RECEPTION UNIT /7a /71a

STORING AND READING UNIT /78a

STORAGE /79a

PRODUCER NODE

TRANSMISSION AND RECEPTION UNIT /7c1 /71c1

STORING AND READING UNIT /78c1

STORAGE /79c1

INTERMEDIARY NODE

TRANSMISSION AND RECEPTION UNIT /7c2 /71c2

STORING AND READING UNIT /78c2

STORAGE /79c2

INTERMEDIARY NODE

TRANSMISSION AND RECEPTION UNIT /7d /71d

STORING AND READING UNIT /78d

STORAGE /79d

USER NODE

BLOCKCHAIN NETWORK (COMMON DATA INFRASTRUCTURE) 100

EP 4 432 206 A1

# FIG. 4

| PRODUCER ID | PRODUCER NAME | TYPE OF PRODUCTION METHOD | AVAILABLE SUPPLY AMOUNT(kWh) |
|---|---|---|---|
| P0001 | PRODUCER A1 | SOLAR LIGHT | 100 |
| P0002 | PRODUCER A2 | WIND POWER | 100 |
| P0003 | PRODUCER A3 | HYDROPOWER | 200 |
| P0004 | PRODUCER A4 | PETROLEUM | 500 |
| P0005 | PRODUCER A5 | COAL | 300 |
| … | … | … | … |

EP 4 432 206 A1

# FIG. 5

| USER ID | USER NAME | USAGE START DATE | USAGE END DATE | PLANNED USAGE AMOUNT | RENEWABLE ENERGY USAGE RATIO | USAGE RATIO ACHIEVEMENT PERIOD | PRODUCER ID | PRODUCER NAME | TYPE OF PRODUCTION METHOD |
|---|---|---|---|---|---|---|---|---|---|
| U0001 | USER D1 | 2023.1.1 | 2023.12.31 | 20 | 40 | ONE MONTH | P0001 | PRODUCER A1 | SOLAR LIGHT |
| | | | | | | | P0002 | PRODUCER A2 | WIND POWER |
| | | | | | | | P0004 | PRODUCER A4 | PETROLEUM |
| U0002 | USER D2 | 2023.1.1 | 2025.12.31 | 30 | 50 | THREE MONTHS | P0001 | PRODUCER A1 | SOLAR LIGHT |
| | | | | | | | P0002 | PRODUCER A2 | WIND POWER |
| | | | | | | | P0005 | PRODUCER A5 | COAL |
| U0003 | USER D3 | 2023.1.1 | 2023.12.31 | 40 | 30 | ONE YEAR | P0003 | PRODUCER A3 | HYDROPOWER |
| | | | | | | | P0004 | PRODUCER A4 | PETROLEUM |
| . . . | . . . | . . . | . . . | . . . | . . . | . . . | . . . | . . . | . . . |

EP 4 432 206 A1

# FIG. 6

EP 4 432 206 A1

# FIG. 7

| No | FIELD NAME | TYPE | FIELD DEFINITION |
|---|---|---|---|
| 1 | docType | string | FIELD INDICATING DATA STRUCTURE TYPE IN BLOCKCHAIN |
| 2 | energyId | string | UNIQUE DATA ID OF ELECTRICITY-RELATED DATA IN BLOCKCHAIN |
| 3 | state | string(or enum) | TRANSACTION STATUS (GENERATION, RETAIL (INTERMEDIARY TRANSFER), CONSUMPTION, ETC.) |
| 4 | energyType | string(or enum) | TYPE OF PRODUCTION METHOD (CLASSIFICATION OF SOLAR LIGHT, WIND POWER, ETC.) |
| 5 | renewableFlag | bool | FLAG INDICATING WHETHER ELECTRICITY IS PRODUCED BY RENEWABLE ENERGY |
| 6 | generatedDate | string(date) | DATE/TIME OF PRODUCTION OF ELECTRICITY |
| 7 | value | int | AMOUNT OF ELECTRICITY |
| 9 | generator | string | GENERATOR (PRODUCER) OF ELECTRICITY |
| 10 | owner | string | CURRENT OWNER |
| 11 | prevOwner | string[] | PREVIOUS OWNER |
| 12 | rootEnergyId | string[] | DATA ID OF PARENT ELECTRICITY-RELATED DATA IN DIVIDING ELECTRICITY-RELATED DATA |
| 13 | branchAssets | string[] | DATA ID OF CHILD ELECTRICITY-RELATED DATA IN DIVIDING ELECTRICITY-RELATED DATA |
| 14 | extendedAttriute | string[] | EXTENDED ATTRIBUTES |

EP 4 432 206 A1

# FIG. 8

EP 4 432 206 A1

# FIG. 9

PRODUCER A
PRODUCER SYSTEM 5a
POWER GENERATION SYSTEM 3
PRODUCER NODE 7a

INTERMEDIARY C1
INTERMEDIARY SYSTEM 5c1
INTERMEDIARY NODE 7c1

INTERMEDIARY C2
INTERMEDIARY SYSTEM 5c2
INTERMEDIARY NODE 7c2

USER D
USER SYSTEM 5d
USER NODE 7d

S51 ADJUST SUPPLY AND DEMAND

RECORD ALLOCATION
S52

SHARE DATA
S53

SHARE DATA
S54

SHARE DATA
S55

S56 ADJUST SUPPLY AND DEMAND

RECORD ALLOCATION
S57

SHARE DATA
S58

SHARE DATA
S59

SHARE DATA
S60

EP 4 432 206 A1

# FIG. 10

EP 4 432 206 A1

# FIG. 11

| No | FIELD NAME | TYPE | FIELD DEFINITION |
|---|---|---|---|
| 1 | docType | string | FIELD INDICATING DATA STRUCTURE TYPE IN BLOCKCHAIN |
| 2 | surplusEnergyId | string | UNIQUE DATA ID OF SURPLUS ELECTRICITY-RELATED DATA IN BLOCKCHAIN |
| 3 | state | string(or enum) | STATUS OF SURPLUS ELECTRICITY (REGISTERED, RETAIL (INTERMEDIARY TRANSFER), SOLD (INTERMEDIARY ARRANGED)) |
| 4 | renewableFlag | bool | FLAG INDICATING WHETHER ELECTRICITY IS PRODUCED BY RENEWABLE ENERGY |
| 5 | generatedDate | string(date) | DATE/TIME OF SURPLUS ELECTRICITY GENERATION |
| 6 | totalValue | int | TOTAL AMOUNT OF SURPLUS ELECTRICITY |
| 7 | value | int | REMAINING AMOUNT OF SURPLUS ELECTRICITY |
| 8 | owner | string | CREATOR OF SURPLUS ELECTRICITY-RELATED DATA |
| 9 | rerateEnergyIds | string[] | ASSOCIATION WITH ELECTRICITY-RELATED DATA |
| 10 | extendedAttribute | string[] | EXTENDED ATTRIBUTES |

EP 4 432 206 A1

# FIG. 12

INTERMEDIARY — C1

INTERMEDIARY SYSTEM — 5c1

INTERMEDIARY NODE — 7c1

S91 — READ USER IDS OF PREDETERMINED USERS EACH HAVING TRANSACTION CONTRACT WITH THE SAME PREDETERMINED PRODUCER

S92 — READ RENEWABLE ENERGY USAGE RATIO CORRESPONDING TO EACH OF USER IDS

S93 — AMOUNTS OF SUPPLY OF ELECTRICITY

S94 — CALCULATE AMOUNT OF TOTAL SUPPLY

S95 — AMOUNTS OF USAGE OF ELECTRICITY

S96 — CALCULATE AMOUNT OF TOTAL USAGE

# FIG. 13

EP 4 432 206 A1

## FIG. 14

| No | FIELD NAME | TYPE | FIELD DEFINITION |
|---|---|---|---|
| 1 | docType | string | FIELD INDICATING DATA STRUCTURE TYPE IN BLOCKCHAIN |
| 2 | shorgateEnergyId | string | UNIQUE DATA ID OF ELECTRICITY SHORTAGE-RELATED DATA IN BLOCKCHAIN |
| 3 | state | string(or enum) | STATUS OF ELECTRICITY SHORTAGE (REGISTERED,SHORTAGE, SUPPLIEMENTED) |
| 4 | renewableFlag | bool | FLAG INDICATING WHETHER ELECTRICITY IS PRODUCED BY RENEWABLE ENERGY |
| 5 | generatedDate | string(date) | DATA/TIME OF OCCURANCE OF ELECTRICITY SHORTAGE |
| 6 | totalValue | int | TOTAL AMOUNT OF ELECTRICITY SHORTAGE |
| 7 | value | int | REMAINING AMOUNT OF ELECTRICITY SHORTAGE |
| 8 | owner | string | CREATOR OF ELECTRICITY SHORTAGE-RELATED DATA |
| 9 | rerateEnergyIds | string[] | ASSOCIATE WITH ELECTRICITY-RELATED DATA |
| 10 | extendedAttribute | string[] | EXTENDED ATTRIBUTES |

EP 4 432 206 A1

Europäisches
Patentamt

European
Patent Office

Office européen
des brevets

# EUROPEAN SEARCH REPORT

**Application Number**

EP 24 16 1076

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/020412 A1 (MAYUZUMI RYUSUKE [JP]) 19 January 2023 (2023-01-19) * the whole document * | 1-9 | INV. G06Q50/06 H02J3/00 |
| A | WO 2019/141511 A1 (EATON INTELLIGENT POWER LTD [IE]) 25 July 2019 (2019-07-25) * abstract * | 1-9 | |
| A | WO 2017/199053 A1 (MAYNE TIMOTHY [GB]; UMANSKY SERGE [CH]) 23 November 2017 (2017-11-23) * abstract * | 1-9 | |
| A | JP 2021 152846 A (RICOH CO LTD) 30 September 2021 (2021-09-30) * abstract * | 1-9 | |

**TECHNICAL FIELDS SEARCHED (IPC)**

G06Q
H02J

The present search report has been drawn up for all claims

| Place of search | Date of completion of the search | Examiner |
|---|---|---|
| Munich | 17 July 2024 | Weidmann, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 432 206 A1

## ANNEX TO THE EUROPEAN SEARCH REPORT
## ON EUROPEAN PATENT APPLICATION NO.

EP 24 16 1076

This annex lists the patent family members relating to the patent documents cited in  the above-mentioned European search report.
The members are as contained in the European Patent Office EDP file on
The European Patent Office is in no way liable for these particulars which are merely given for the purpose of information.

17-07-2024

| Patent document cited in search report | | Publication date | Patent family member(s) | | Publication date |
|---|---|---|---|---|---|
| US 2023020412 | A1 | 19-01-2023 | EP | 4123555 A1 | 25-01-2023 |
| | | | US | 2023020412 A1 | 19-01-2023 |
| | | | WO | 2021187168 A1 | 23-09-2021 |
| WO 2019141511 | A1 | 25-07-2019 | CN | 111771315 A | 13-10-2020 |
| | | | EP | 3741021 A1 | 25-11-2020 |
| | | | US | 2021098988 A1 | 01-04-2021 |
| | | | WO | 2019141511 A1 | 25-07-2019 |
| WO 2017199053 | A1 | 23-11-2017 | EP | 3459038 A1 | 27-03-2019 |
| | | | US | 2019164236 A1 | 30-05-2019 |
| | | | WO | 2017199053 A1 | 23-11-2017 |
| JP 2021152846 | A | 30-09-2021 | JP | 6860108 B1 | 14-04-2021 |
| | | | JP | 2021152846 A | 30-09-2021 |
| | | | JP | 2021184241 A | 02-12-2021 |

EPO FORM P0459

For more details about this annex : see Official Journal of the European Patent Office, No. 12/82

**EP 4 432 206 A1**

## REFERENCES CITED IN THE DESCRIPTION

**Patent documents cited in the description**

- JP 2019144851 A